# EUROPÄISCHE PATENTANMELDUNG

(11) **EP 3 163 144 A1**
(43) Veröffentlichungstag der Anmeldung: **03.05.2017**
(21) Anmeldenummer: 15191680.6
(22) Anmeldetag: 27.10.2015
(51) Int. Cl.: F16L 59/135, F16B 21/09

(54) **VORRICHTUNG, VORZUGSWEISE ROHRSCHELLE, MIT VERSCHLUSSMECHANISMUS MIT FÜHRUNGSKANÄLEN**

(71) Anmelder: HILTI Aktiengesellschaft, 9494 Schaan (LI)
(72) Erfinder: Mueller, Manuel, 7324 Vilters (CH); Ohm, Konstantin, 7320 Sargans (CH)
(74) Vertreter: Hilti Aktiengesellschaft Corporate Intellectual Property

(57) **Zusammenfassung**

Vorrichtung mit zwei miteinander verbindbaren Elementen, wobei das erste Element (1) einen Bolzen (15) und das zweite Element (2) eine Grundplatte (21) und einen Körper (22) aufweist, wobei in der Grundplatte eine Durchgangsöffnung (30) ausgebildet ist, welche einen Einführbereich (31) und einen versetzten Sicherungsbereich (32) aufweist, wobei der Einführbereich eine grössere Weite aufweist als ein Kopf des Bolzens und der Sicherungsbereich eine kleinere Weite aufweist als der Kopf des Bolzens, wobei im Körper (22) im Anschluss an den Einführbereich ein Einführkanal (41) und im Anschluss an den Sicherungsbereich ein Sicherungskanal (42) vorgesehen ist, die ineinander übergehen, wobei an deren Übergang eine Weitenreduktion gebildet ist, welche beabstandet von der Grundplatte ausläuft, so dass nahe der Grundplatte ein Übertritt des Kopfs des Bolzens zwischen dem Sicherungskanal und dem Einführkanal blockiert ist und weiter entfernt von der Grundplatte möglich ist.

## Beschreibung

Die Erfindung betrifft eine schliessbare Vorrichtung mit einem ersten Element und einem hiermit verbindbaren zweiten Element gemäss Anspruch 1, insbesondere eine Rohrschelle.

Verschlussmechanismen für Rohrschellen in unterschiedlicher Ausführung sind aus der WO 15009141 A1, der EP 2682656 B1, der EP 2588788 B1, der EP 2425168 B1, der DE 102007025191 A1, der EP 1950480 B1, der EP 0597805 B1 sowie der DE 4213864 C2 bekannt.

Die US 2001055521 A1 und die US 6305889 B1 zeigen verschiedene Schnellverbinder für eine Gewindestange, wobei die Gewindestange jeweils von einem federnden Element gehalten wird.

Die GB 1591003 A und die US 2002130237 A1 offenbaren clipartige Befestigungselemente für Kabel oder ähnliche.

Aufgabe der Erfindung ist es, eine schliessbare Vorrichtung, insbesondere eine Rohrschelle anzugeben, welche einen besonders einfach herstellbaren und zugleich besonders zuverlässigen und leistungsfähigen Verschlussmechanismus aufweist.

Die Aufgabe wird erfindungsgemäss durch eine Vorrichtung mit den Merkmalen des Anspruchs 1 gelöst. Bevorzugte Ausführungsformen sind in den abhängigen Ansprüchen angegeben.

Nach der Erfindung ist eine schliessbare Vorrichtung mit einem ersten Element und einem zweiten Element vorgesehen, wobei das erste Element mit dem zweiten Element verbindbar ist,
- wobei das erste Element eine Basis und einen an der Basis angeordneten Bolzen mit einem Schaft und mit einem Kopf aufweist, wobei der Kopf des Bolzens eine grössere Weite aufweist als der Schaft des Bolzens,
- wobei das zweite Element eine Grundplatte und einen der Grundplatte benachbarten Körper aufweist,
- wobei in der Grundplatte eine Durchgangsöffnung ausgebildet ist, welche einen Einführbereich und einen zum Einführbereich versetzten Sicherungsbereich aufweist, wobei der Einführbereich eine grössere Weite aufweist als der Kopf des Bolzens, so dass der Kopf des Bolzens durch den Einführbereich hindurchführbar ist, und wobei der Sicherungsbereich eine kleinere Weite aufweist als der Kopf des Bolzens, so dass der Kopf des Bolzens am Sicherungsbereich von der Grundplatte formschlüssig gehalten werden kann, und
- wobei im Körper im Anschluss an den Einführbereich der Durchgangsöffnung ein Einführkanal und im Anschluss an den Sicherungsbereich der Durchgangsöffnung ein Sicherungskanal vorgesehen ist, wobei der Einführkanal und der Sicherungskanal ineinander übergehen, wobei am Übergang zwischen dem Einführkanal und dem Sicherungskanal eine Weitenreduktion gebildet ist, welche beabstandet von der Grundplatte ausläuft, so dass nahe der Grundplatte ein Übertritt des Kopfs des Bolzens zwischen dem Sicherungskanal und dem Einführkanal blockiert ist, weiter entfernt von der Grundplatte hingegen ein Übertritt des Kopfs des Bolzens zwischen dem Einführkanal und dem Sicherungskanal möglich ist.

Ein erster Grundgedanke der Erfindung kann darin gesehen werden, in der Grundplatte des zweiten Elements eine schlüssellochförmige Durchgangsöffnung mit einem durchmessergrösseren Einführbereich und einem an den Einführbereich angrenzenden durchmesserkleineren Sicherungsbereich derart vorzusehen, dass der Einführbereich den Kopf des Bolzens des ersten Elements passieren lässt, wohingegen der Sicherungsbereich den Kopf des Bolzens formschlüssig sichert. Ein weiterer Grundgedanke der Erfindung kann darin gesehen werden, anschliessend an die Durchgangsöffnung, vorzugsweise oberhalb der Durchgangsöffnung, zwei ineinander übergehende Kanäle zur Führung des Kopfs des Bolzens vorzusehen, nämlich den Einführkanal und den Sicherungskanal, wobei zwischen den beiden Kanälen eine Weitenreduktion vorgesehen ist. Diese Weitenreduktion verhindert nahe der Grundplatte einen Übertritt des Kopfs des Bolzens vom Sicherungskanal in den Einführkanal und hält den Kopf des Bolzens somit am Sicherungsbereich, wo der Kopf des Bolzens formschlüssig von der Grundplatte gehalten wird. Allerdings läuft die Weitenreduktion in einem gewissen Abstand von der Grundplatte aus und ermöglicht dort einen Übertritt des Kopfs des Bolzens vom Einführkanal in den Sicherungskanal. Somit kann der Kopf des Bolzens in einer vorzugsweise zumindest annähernd V-förmigen Bahn, bei welcher der Abstand des Kopfs des Bolzens von der Grundplatte zunächst im Einführkanal zunimmt und danach im Sicherungskanal wieder abnimmt, vom Einführbereich zum Sicherungsbereich überführt werden. Im Verlauf der V-förmigen Bahn gelangt der Bolzen von einer Einführposition, in welcher der Kopf des Bolzens am Einführbereich der Durchgangsöffnung angeordnet ist und der Kopf somit durch die Durchgangsöffnung hindurchtreten kann, in eine Sicherungsposition, in welcher der Kopf des Bolzens am Sicherungsbereich der Durchgangsöffnung angeordnet ist und der Kopf somit gegen ein Herausziehen aus der Durchgangsöffnung der Grundplatte formschlüssig gesichert ist. Umgekehrt muss der Kopf des Bolzens beim Rücküberführen von der Sicherungsposition in die Einführposition ebenfalls eine V-förmige Bahn durchlaufen. Da das Durchlaufen einer solchen V-förmigen Bahn in der Regel jedoch einen gezielten Eingriff erfordert, der in der Regel nicht zufällig erfolgt, ist eine Vormontageposition gegeben, sobald sich der Kopf des Bolzens im Sicherungskanal befindet. Durch anschliessendes Festziehen des Bolzens am erste Element, das heisst durch Festlegen des Kopfs des Bolzens in einer Position nahe der Grundplatte, kann das rückwärtige Durchlaufen der V-förmigen Bahn im Anschluss komplett unterbunden werden und damit eine Endmontageposition eingenommen werden.

Erfindungsgemäss wird also ein Schnellverschlussmechanismus zur Verfügung gestellt, bei dem zumindest eine Vormontageposition, in welcher der Kopf des Bolzens des ersten Elements am zweiten Element gesichert ist, eingenommen werden kann, und dies insbesondere ohne Werkzeugeinsatz. Unter anderem weil dabei erfindungsgemäss zumindest der lasttragende Teil des Verschlussmechanismus ohne bewegliche oder zu deformierende Teile auskommen kann, ist erfindungsgemäss eine besonders hohe Zuverlässigkeit gegeben und es kann in besonders einfacher Weise ein besonders belastbarer Verschlussmechanismus erhalten werden. Zugleich ist der Verschlussmechanismus besonders einfach herstellbar, beispielsweise die Kanäle in einem Kunststoffspritzverfahren und die Durchgangsöffnung der Grundplatte in einem Stanzbiegeverfahren.

Der Sicherungsbereich und der Einführbereich der Durchgangsöffnung sind vorzugsweise in einer Längsrichtung der Grundplatte zueinander versetzt. Die Weite wird vorzugsweise quer zu dieser Längsrichtung gemessen. Insbesondere können die Längsrichtung und die Querrichtung in der Ebene der Grundplatte liegen. Soweit hier von einem Abstand von der Grundplatte die Rede ist, kann dieser vorzugsweise senkrecht zur Längsrichtung und senkrecht zur Querrichtung gemessen werden, vorzugsweise senkrecht zur Ebene der Grundplatte.

Der Sicherungsbereich hat eine kleinere Weite als der Kopf des Bolzens, so dass dort an der Grundplatte eine Hinterschneidung gebildet ist, welche den Kopf des Bolzens formschlüssig, auf entgegengesetzten Seiten, sichern kann. Die Weite des Schafts des Bolzens ist erfindungsgemäss kleiner als die Weite des Sicherungsbereichs, so dass der Bolzen durch den Sicherungsbereich hindurchtreten kann. Der Einführbereich weist eine grössere Weite auf als der Sicherungsbereich.

Insbesondere kann an der Weitenreduktion, an welcher die beiden Kanäle aneinander angrenzen, eine lokale Verringerung der lichten Weite gebildet sein. An der Weitenreduktion ist vorzugsweise eine Restweite gegeben, welche grösser ist als die Weite des Schafts des Bolzens, so dass der Schaft des Bolzens die Weitenreduktion passieren kann. Vorzugsweise läuft die Weitenreduktion mit zunehmendem Abstand von der Grundplatte kontinuierlich aus. Dies kann einem unerwünschten Verhaken des Bolzens am Körper entgegenwirken, aber auch die Herstellung vereinfachen. Grundsätzlich könnte die Weitenreduktion aber auch stufenartig auslaufen. Hierdurch könnte beispielsweise ein Schnappmechanismus realisiert werden.

Erfindungsgemäss gehen der Einführkanal und der Sicherungskanal ineinander über, um einen Übertritt des Bolzens zwischen diesen beiden Kanälen zu ermöglichen. Dies kann gegebenenfalls auch beinhalten, dass zwischen den beiden Kanälen eine oder mehrere vom Bolzen durchstossbare Membranen oder vom Bolzen verformbare Elemente angeordnet sind.

Der Einführkanal und/oder der Sicherungskanal sind vorzugsweise gerade, das heisst ungekrümmt, was herstellungstechnisch vorteilhaft sein kann, insbesondere wenn die Kanäle in einem Kunststoffmaterial geformt werden. Insbesondere können der Einführkanal und/oder der Sicherungskanal unstetig ineinander übergehen. Der Einführkanal und/oder der Sicherungskanal können aber auch gekrümmt ausgebildet sein und/oder der Einführkanal und der Sicherungskanal können stetig ineinander übergehen. Im diesem Fall kann der Kopf des Bolzens beim Übergang vom Einführbereich in den Sicherungsbereich beispielsweise eine U-förmige Bahn oder Kreisbahn anstelle einer V-förmigen Bahn beschreiben.

Besonders bevorzugt ist es, dass der Bolzen ein Schraubbolzen ist, welcher in die Basis des ersten Elements unter Annäherung des Kopfs des Bolzens an die Basis des ersten Elements einschraubbar ist. Durch Einschrauben des Bolzens in die Basis des ersten Elements kann in besonders einfacher Weise verhindert werden, dass der Kopf des Bolzens die zumindest annähernd V-förmige Bahn im Körper des zweiten Elements in entgegengesetzter Richtung zurück zum Einführbereich durchläuft, das heisst durch Einschrauben des Bolzens kann der Verschlussmechanismus von der Vormontageposition in die Endmontageposition gebracht werden. Der Schaft des Schraubbolzens weist zweckmässigerweise ein Aussengewinde auf, welches in ein korrespondierendes Innengewinde in der Basis des ersten Elements eingeschraubt ist. Als Alternative zu einem Schraubmechanismus könnte der Bolzen auch beispielsweise mittels eines Bajonettmechanismus am ersten Element gesichert werden.

Weiterhin ist es zweckmässig, dass der Sicherungskanal einen Durchgang durch den Körper des zweiten Elements bildet. Der Sicherungskanal tritt demgemäss an entgegengesetzten Seiten des Körpers zutage. Dies kann einerseits fertigungstechnisch vorteilhaft sein, insbesondere wenn der Körper, in welchem der Sicherungskanal gebildet ist, aus einem Kunststoffmaterial besteht. Ein als Durchgang ausgeführter Sicherungskanal kann darüber hinaus einen besonders einfachen Zugang zum Kopf des Bolzens erlauben, was insbesondere dann vorteilhaft ist, wenn der Bolzen ein Schraubbolzen ist und zum Einschrauben mit einem Drehmoment beaufschlagt werden muss. Zweckmässigerweise weist der Kopf des Bolzens einen Antrieb zum Aufbringen eines Drehmoments auf den Bolzen auf. Hierdurch ist, insbesondere bei einem Schraubbolzen, eine besonders einfache Drehmomentübertragung möglich. Für eine formschlüssige Drehmomentübertragung kann der Antrieb beispielsweise eine oder mehrere Schlüsselflächen oder/und einen oder mehrere stirnseitige Schlitze aufweisen.

Ferner ist es vorteilhaft, dass der Sicherungskanal senkrecht auf der Grundplatte steht, zumindest mit einer Winkelabweichung von maximal 5°, 10° oder 20°. Insbesondere steht also die Längsachse des Sicherungskanals, zumindest mit einer Winkelabweichung von maximal 5°, 10° oder 20°, senkrecht auf der durch die Durchgangsöffnung in der Grundplatte definierten Längsrichtung und der Querrichtung. Gemäss dieser Ausführungsform kann einerseits in besonders einfacher Art und Weise sichergestellt werden, dass der Kopf des Bolzens zuverlässig in die Sicherungsposition am Sicherungsbereich fällt und/oder dass der Kopf diese Sicherungsposition nicht versehentlich verlässt. Darüber hinaus kann einem potenziell unerwünschten Versatz des ersten Elements relativ zum zweiten Element in einer Richtung parallel zur Ebene der Grundplatte beim Einschrauben des Bolzen, das heisst beim Übergang von der Vormontageposition in die Endmontageposition, vermieden werden, und es kann eine besonders gute Zugänglichkeit des Kopfs des Bolzens zum Drehen des Bolzens gegeben sein, was die Zuverlässigkeit noch weiter erhöhen kann.

Weiterhin ist es vorteilhaft, dass der Einführkanal schräg, das heisst unter einem von 90° verschiedenen Winkel, auf der Grundplatte steht, insbesondere unter einem Winkel zwischen 30° und 60°, vorzugsweise unter einem Winkel von zumindest annähernd 45°. Hierdurch kann in besonders einfacher Weise eine Führungsfunktion realisiert werden, bei der der Bolzen beim Zusammenschieben des ersten Elements und des zweiten Elements diagonal an der Wand des Einführkanals entlang in den Sicherungskanal und somit zur Sicherungsposition hin geführt wird.

Aus den zuvor genannten Gründen verläuft der Einführkanal vorzugsweise nicht-parallel zur Längsachse des Bolzens und/oder der Sicherungskanal parallel, oder unter einem Winkel von maximal 5°, 10° oder 20°, zur Längsachse des Bolzens. Der Einführkanal und der Sicherungskanal verlaufen zweckmässigerweise nicht-parallel zueinander, wodurch eine effiziente Führungsfunktion realisiert werden kann.

Vorzugsweise kann vorgesehen sein, dass der Sicherungskanal, insbesondere dessen Längsachse, einen Winkel kleiner als 45°, vorzugsweise kleiner als 30°, 10° oder 5°, mit der Richtung der Erdbeschleunigung einschliesst. Denn bei kleinen Winkeln zur der Richtung der Erdbeschleunigung kann der Kopf des Bolzens im Sicherungskanal durch Schwerkraftwirkung vom Übergang der beiden Kanäle zur Grundplatte und zum Sicherungsbereich der Durchgangsöffnung gelangen, was einem unbeabsichtigten Verlassen der Vormontageposition einfach und wirkungsvoll entgegenwirken kann. Vorzugsweise ist das erste Element mit dem Bolzen oberhalb des zweiten Elements mit den Kanälen angeordnet, wobei sich die Angabe "oberhalb" auf die Erdbeschleunigung beziehen kann. Die vom Kopf des Bolzens beim Übergang vom Einführbereich zum Sicherungsbereich im zweiten Element zurückgelegte Bahn kann dann regulär V-förmig sein. Grundsätzlich kann die Vorrichtung aber auch in anderen Positionen relativ zum Schwerefeld angeordnet werden, insbesondere invers zur eben beschriebenen Position, wobei dann eine umgekehrt V-förmige Bahn des Kopfs des Bolzens im zweiten Element resultieren kann.

Eine weitere bevorzugte Ausgestaltung der Erfindung liegt darin, dass das zweite Element eine Feder aufweist, welche einem Übertritt des Bolzens, insbesondere des Kopfs des Bolzens, vom Sicherungskanal in den Einführkanal entgegenwirkt. Diese Feder kann beispielsweise einen Schnappmechanismus bilden, der gespannt wird, wenn der Kopf des Bolzens den Einführkanal passiert, und der zumindest teilweise entspannt, sobald der Kopf des Bolzens in den Sicherungskanal gelangt ist. Insbesondere kann die zumindest teilweise entspannte Feder den im Sicherungskanal aufgenommenen Kopf des Bolzens formschlüssig im Sicherungskanal sichern oder den im Sicherungskanal aufgenommenen Kopf des Bolzens zumindest in Richtung des Sicherungskanals zurückdrängen. Hierdurch kann einem unerwünschten Öffnen der vormontierten Vorrichtung besonders wirksam entgegengewirkt werden. Da erfindungsgemäss die Lastübertragung zwischen dem ersten Element und dem zweiten Element an der Grundplatte erfolgt, muss die Feder zur Lastübertragung nicht unmittelbar beitragen, was im Hinblick auf den Aufwand und die Lastwerte vorteilhaft sein kann. Die Feder kann darüber hinaus dem Monteur eine Rückkopplung über den Fortschritt des Montagevorgangs geben. Beispielsweise kann die von der Feder auf den Bolzen ausgeübte Kraft kontinuierlich zunehmen, wenn der Kopf des Bolzens im Einführkanal vom Einführbereich hinweg bewegt wird, und zwar so lange, bis der Kopf des Bolzens im Einführkanal angelangt ist und die Feder wieder entspannt. Besonders vorteilhaft ist es, dass der Körper des zweiten Elements eine Federaufnahme zum Aufnehmen der Feder aufweist, wobei die Federaufnahme an den Einführkanal angrenzt. Hierdurch kann unter anderem die eben beschriebene Rückkopplung über den Fortschritt des Montagevorgangs in konstruktiv besonders einfacher Weise realisiert werden. Die Feder kann beispielsweise aus einem, insbesondere gebogenen, Federblech bestehen. Vorzugsweise ist die Feder einstückig mit dem Körper des zweiten Elements ausgebildet, was die Herstellung weiter vereinfachen kann. Die Feder ist vorzugsweise zumindest bereichsweise plattenförmig ausgebildet.

Vorzugsweise kann sich der Kopf des Bolzens mit zunehmendem Abstand vom Schaft des Bolzens verjüngen. Hiermit kann eine selbstzentrierende Funktion realisiert werden, welche die Zuverlässigkeit noch weiter erhöhen kann. Darüber hinaus kann die Wechselwirkung des Kopfs des Bolzens mit den Kanälen und/oder mit der gegebenenfalls vorhandenen Feder noch weiter verbessert werden. Beispielsweise kann der Kopf des Bolzens mit einem kegelstumpfförmigen Mantel ausgebildet sein.

Weiterhin ist es bevorzugt, dass der Einführkanal und/oder der Sicherungskanal zylindrisch ausgebildet ist, was insbesondere beinhalten soll, dass der jeweilige Kanal durch eine Vielzahl parallel verlaufender Mantellinien gebildet ist. Dies kann einerseits fertigungstechnische Vorteile haben, insbesondere wenn der Körper des zweiten Elements aus Kunststoff besteht. Darüber hinaus kann die Zuverlässigkeit im Betrieb hierdurch noch weiter erhöht werden.

Die Grundplatte des zweiten Elements und der Körper des zweiten Elements können auch aus demselben Material und insbesondere einstückig ausgebildet sein, was potenziell den Herstellungsaufwand noch weiter reduzieren könnte. Vorzugsweise sind die Grundplatte des zweiten Elements und der Körper des zweiten Elements jedoch separate Teile. Dies kann beispielsweise im Hinblick auf die Tragfähigkeit des Verschlussmechanismus vorteilhaft sein. Die Grundplatte kann auch mehrteilig ausgeführt sein. Beispielsweise kann vorgesehen sein, dass der Körper des zweiten Elements aus einem Schaumstoffmaterial besteht und/oder dass die Grundplatte des zweiten Elements aus einem Metallmaterial besteht. Dies kann insbesondere dann vorteilhaft sein, wenn die erfindungsgemässe Vorrichtung eine Kälterohrschelle ist. Der Körper des zweiten Elements besteht vorzugsweise aus einem Kunststoffmaterial, insbesondere aus PUR, was im Hinblick auf dessen thermische Eigenschaften vorteilhaft sein kann. Die Grundplatte und der Körper des zweiten Elements können zweckmässigerweise aneinander angrenzen. Der Bolzen kann zweckmässigerweise aus einem Metallmaterial bestehen.

Besonders bevorzugt ist es, dass die erfindungsgemässe Vorrichtung eine Rohrschelle ist, insbesondere eine Kälterohrschelle, das heisst eine Rohrschelle zum thermisch isolierten Abstützen eines Rohres. Demgemäss kann das erste Element eine erste Rohraufnahme und/oder das zweite Element eine zweite Rohraufnahme aufweisen. Die Rohraufnahmen können vorzugsweise zylindersegmentförmig ausgebildet sein.

Eine weitere bevorzugte Ausgestaltung der Erfindung liegt darin, dass das erste Element einen weiteren Bolzen aufweist, der mit dem zweiten Element verbindbar ist. Hierdurch kann die Montage noch weiter vereinfacht werden. Der weitere Bolzen wird vorzugsweise mittels eines Verschlussmechanismus am zweiten Element verriegelt, welcher analog zum Verschlussmechanismus für den ersten Bolzen ausgebildet ist. Die Basis des ersten Elements kann auch eine Grundplatte, insbesondere aus einem Metallmaterial, und einen Körper, insbesondere aus einem Schaumstoffmaterial, aufweisen. Insbesondere bei einer Anwendung als Rohrschelle können die beiden Elemente auch über ein Scharnier verbunden sein.

Besonders zweckmässig ist es, dass der Einführkanal zwei gegenüberliegende, vorzugsweise ebene, Flanken zur Führung des Kopfs des Bolzens, insbesondere zur Führung des Kopfs des Bolzens im Linienkontakt, aufweist. Diese Flanken weisen für einen Linienkontakt mit dem Kopf des Bolzens vorzugsweise im Schnitt eine Gegenform zum Kopf des Bolzens auf. Insbesondere können die Flanken denselben Öffnungswinkel wie der Kopf des Bolzens aufweisen, wobei dieser Öffnungswinkel insbesondere kleiner sein kann als das Doppelte des Winkels, unter dem der Einführkanal auf der Grundplatte steht. Wie im Zusammenhang mit den Figuren näher erläutert ist, kann hierdurch eine besonders kompakte und zugleich zuverlässig führende Anordnung erhalten werden. Der Linienkontakt zwischen den Flanken und dem Kopf des Bolzens kann zweckmässigerweise nicht-parallel zur Längsachse des Bolzens verlaufen.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung eines Ausführungsbeispiels einer als Kälterohrschelle ausgeführten erfindungsgemässen Vorrichtung;
- Figur 2:: eine Vorderansicht der Vorrichtung aus Figur 1;
- Figur 3:: eine Seitenansicht der Vorrichtung aus Figur 1;
- Figur 4:: eine Vorderansicht des zweiten Elements, das heisst der zweiten Schellenhälfte, der Vorrichtung aus Figur 1;
- Figur 5:: eine Ansicht gemäss 5-5 aus Figur 4 des zweiten Elements der Vorrichtung aus Figur 1, das heisst mit Blick auf die Aussenseite der Grundplatte;
- Figur 6:: eine geschnittene Ansicht gemäss 6-6 aus Figur 4 des zweiten Elements der Vorrichtung aus Figur 1, das heisst mit Blick auf die Aussenseite des Körpers am Übergang zwischen der Grundplatte und dem Körper;
- Figur 7:: eine Teilansicht der rechten Seite der Darstellung aus Figur 5, das heisst eine Teilansicht des zweiten Elements der Vorrichtung aus Figur 1 mit Blick auf die Aussenseite der Grundplatte;
- Figur 8:: eine geschnittene Ansicht gemäss 8-8 aus Figur 4, das heisst eine geschnittene Ansicht des zweiten Elements der Vorrichtung aus Figur 1 mit einer durch die Durchgangsöffnung und die Kanäle, senkrecht zur Ebene der Grundplatte verlaufenden Schnittebene;
- Figuren 9 bis 13:: Ansichten der im Körper des zweiten Elements ausgebildeten Kanäle mit jeweils unterschiedlicher Blickrichtung;
- Figur 14:: eine geschnittene Ansicht analog Figur 8, jedoch zur Darstellung einer bevorzugten Orientierung der Vorrichtung im Schwerefeld um 90° gedreht, wobei zusätzlich die Längsachse des Sicherungskanals, die Richtung der Erdbeschleunigung sowie die Bahn, welche der Kopf des Bolzens beim Einführen in die Durchgangsöffnung und Überführen in die Sicherungsposition im zweiten Element beschreibt, dargestellt sind, letztere mit einem gestrichelten Pfeil; und
- Figur 15:: eine geschnittene Ansicht der im Körper des zweiten Elements ausgebildeten Kanäle zusammen mit dem Bolzen, wobei der Kopf des Bolzens im Einführkanal angeordnet ist, wobei die Schnittebene senkrecht zur Zeichenebene der Figuren 7, 8 und 14 verläuft.

Die Figuren zeigen ein Ausführungsbeispiel einer erfindungsgemässen schliessbaren Vorrichtung. Die Vorrichtung besteht aus einem ersten Element 1 und einem zweiten Element 2, wobei das erste Element 1 mit dem zweiten Element 2 mittels eines unten im Detail beschriebenen Verschlussmechanismus verbunden werden kann.

Die dargestellte Vorrichtung bildet eine Kälterohrschelle und das erste Element 1 sowie das zweite Element 2 bilden jeweils eine Schellenhälfte, wobei das erste Element 1 eine zylindersektorförmige erste Rohraufnahme 91 und das zweite Element 2 eine zylindersektorförmige zweite Rohraufnahme 92 aufweist.

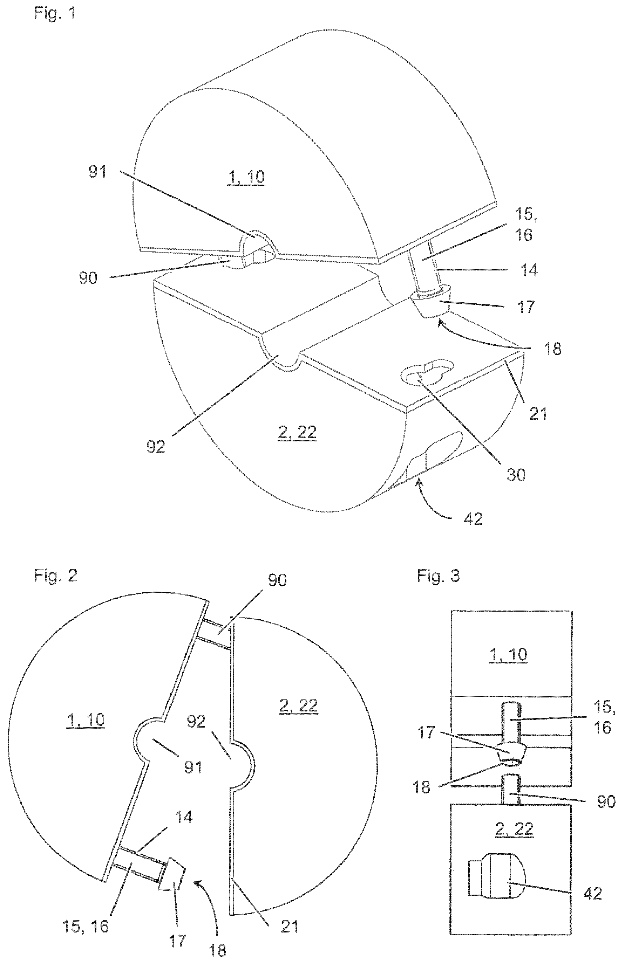

Das erste Element 1 weist eine Basis 10 auf, welche aus einem Körper aus einem Schaumstoffmaterial, vorzugsweise aus PUR, und aus einer Grundplatte besteht, welche am Körper angeordnet ist und welche vorzugsweise aus einem Metallmaterial besteht. Das erste Element 1 weist ferner einen Bolzen 15 mit einem Schaft 16 und einem endseitig am Schaft 16 angeordneten Kopf 17 auf. Der Schaft 16 des Bolzens 15 ist mit einem Aussengewinde 14 versehen, das heisst der Bolzen 15 ist als Schraubbolzen ausgeführt. Die Basis 10 des ersten Elements 1, insbesondere deren Grundplatte, weist ein nicht im Detail dargestelltes Gegengewinde für das Aussengewinde 14 des Schafts 16 auf, in welches der Schaft 16 eingeschraubt ist. Hierdurch ist ein Spindeltrieb gebildet, der es erlaubt, durch Drehung des Bolzens 15 relativ zur Basis 10 den Kopf 17 des Bolzens 15 an die Basis 10 heranzuziehen. Der Kopf 17 des Bolzens 15 ist durchmessegrösser ausgeführt als der Schaft 16 des Bolzens 15, wobei sich der Kopf 17 des Bolzens 15 nach vorne hin, das heisst mit zunehmendem Abstand vom Schaft 16, verjüngt. Insbesondere kann der Kopf 17 des Bolzens 15 kegelstumpfförmig ausgeführt sein. Stirnseitig am Bolzen 15, insbesondere an dessen Kopf 17, ist ein Antrieb 18 angeordnet, mittels dem zum Einschrauben des Bolzens 15 in die Basis 10 des ersten Elements 1 ein Drehmoment auf den Bolzen 15 aufgebracht werden kann. Der Antrieb 18 ist hier beispielhaft ein Innenmehrkant, wie insbesondere in Figur 3 gezeigt ist.

Das zweite Element 2 weist einen Körper 22 aus einem Schaumstoffmaterial, vorzugsweise aus PUR, sowie eine Grundplatte 21 auf, wobei die Grundplatte 21 am Körper 22 angeordnet ist und vorzugsweise aus einem Metallmaterial besteht. Die Rohraufnahme 92 des zweiten Elements 2 wird durch eine Ausnehmung im Körper 22 des zweiten Elements 2 und eine korrespondierende Biegung in der Grundplatte 21 des zweiten Elements 2 gebildet. Analog ist auch die Rohraufnahme 91 des ersten Elements 1 durch eine Ausnehmung im Körper des ersten Elements 1 und eine korrespondierende Biegung in der Grundplatte des ersten Elements 1 gebildet.

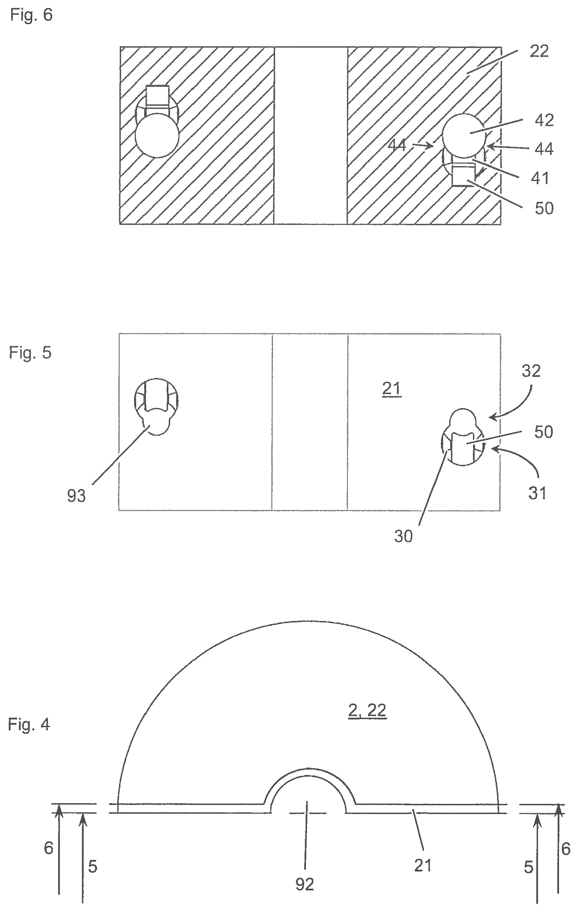

In der Grundplatte 21 des zweiten Elements 2 ist eine Durchgangsöffnung 30 ausgebildet. Wie unter anderem Figur 5 zeigt ist diese Durchgangsöffnung 30 schlüssellochförmig mit einem vergleichsweise weiten Einführbereich 31 und einem an den Einführbereich 31 anschliessenden schmäleren Sicherungsbereich 32 ausgeführt. Der Einführbereich 31 ist derart weit ausgeführt, dass der Kopf 17 des Bolzens 15 durch den Einführbereich 31 hindurchtreten kann. Der Sicherungsbereich 32 hingegen weist eine Weite auf, welche zwar grösser ist als die Weite des Schafts 16 des Bolzens 15, welche jedoch geringer ist als die Weite des Kopfs 17 des Bolzens 15, so dass der Kopf 17 des Bolzens 15 durch den Sicherungsbereich 32 nicht hindurchtreten kann. Somit kann der Sicherungsbereich 32 den Kopf 17 des Bolzens 15 formschlüssig gegen ein Herausziehen aus der Grundplatte 21 und somit aus dem zweite Element 2 sichern.

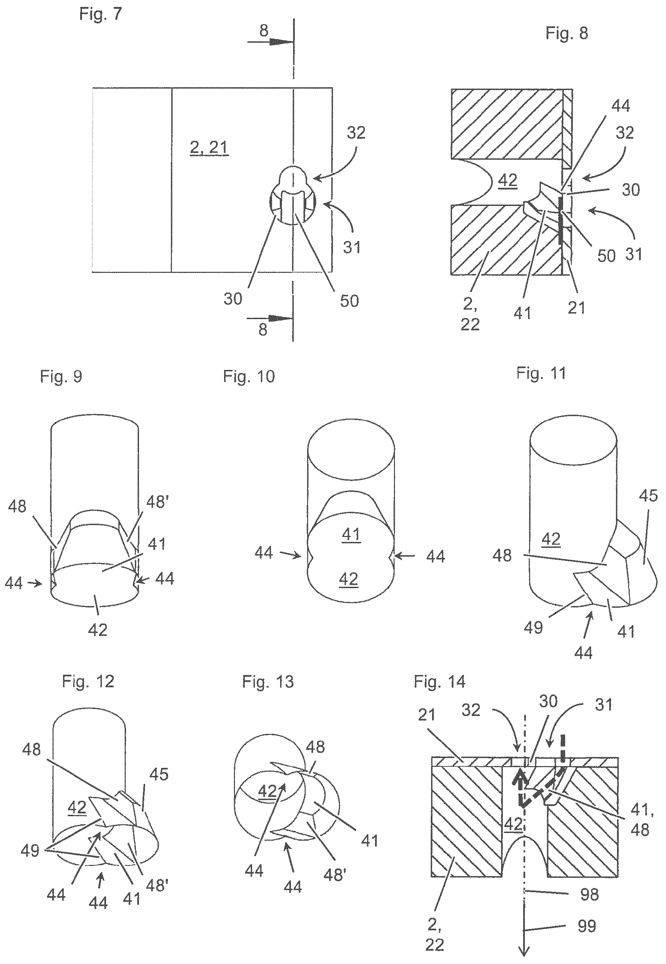

Wie insbesondere ein Vergleich der Figuren 5 und 6 sowie die Figur 8 zeigen, sind im Körper 22 des zweiten Elements 2 ein Einführkanal 41 und ein Sicherungskanal 42 gebildet, wobei sich der Einführkanal 41 an den Einführbereich 31 der Durchgangsöffnung 30 in der Grundplatte 21 anschliesst und sich der Sicherungskanal 42 an den Sicherungsbereich 32 der Durchgangsöffnung 30 in der Grundplatte 21 anschliesst. Wie insbesondere Figur 8 zeigt, steht der an den Sicherungsbereich 32 anschliessende Sicherungskanal 42 senkrecht auf der Ebene der Grundplatte 21, wohingegen der an den Einführbereich 31 anschliessende Einführkanal 41 schräg zur Ebene der Grundplatte 21 verläuft. Der Sicherungskanal 42 bildet einen Durchgang durch den Körper 22, welcher den gesamten Körper 22 durchläuft und auf entgegengesetzten Seiten des Körpers 22 hervortritt, so dass auch die dem Körper 22 zugewandte Seite des Sicherungsbereichs 32 der Durchgangsöffnung 30 und insbesondere der im Sicherungskanal 42 angeordnete Kopf 17 des Bolzens 15 von aussen her zugänglich sind.

Der Einführkanal 41 und der Sicherungskanal 42 gehen ineinander über, so dass ein Übertritt des Bolzens 15, insbesondere dessen Schafts 16, vom Einführkanal 41 in den Sicherungskanal 42 und gegebenenfalls auch zurück möglich ist. Ein Übertritt des Kopfs 17 des Bolzens 15 zwischen dem Sicherungskanal 42 und dem Einführkanal 41 ist hingegen nur mit zusätzlichen geometrischen Einschränkungen möglich. Denn es ist, wie insbesondere in den Figuren 6, 8 und 9 bis 13 erkennbar ist, zwischen dem Einführkanal 41 und dem Sicherungskanal 42 eine Weitenreduktion 44 gebildet, welche die Weite am Übergang zwischen dem Einführkanal 41 und dem Sicherungskanal 42 so reduziert, das der Kopf 17 des Bolzens 15 nahe der Grundplatte 21 nicht zwischen den Kanälen 41 und 42 übertreten kann. Allerdings läuft die Weitenreduktion 44 mit zunehmendem Abstand von der Durchgangsöffnung 30 der Grundplatte 21 aus, das heisst mit zunehmendem Abstand von der Grundplatte 21 wird der Übergang zwischen dem Einführkanal 41 und dem Sicherungskanal 42 in seinen Abmessungen derart weiter, dass in einem gewissen Abstand von der Grundplatte 21 ein Übertritt des Kopfs 17 des Bolzens 15 vom Einführkanal 41 in den Sicherungskanal 42 möglich ist. An der Weitenreduktion 44 ist eine Restweite gegeben, so dass ein Übertritt des Schafts 16 des Bolzens 15 ungeachtet des Abstandes von der Grundplatte 21 möglich ist.

Wie insbesondere die Figuren 6, 9, 10, 12 und 13 zeigen, ist die Weitenreduktion 44 durch eine zweiseitige Taillierung im Schnitt durch die beiden Kanäle 41 und 42 gebildet. Das Auslaufen der Weitenreduktion 44 ist unter anderem in Figur 12 erkennbar, wo diejenige Kanten, welche durch die Weitenreduktion 44 gebildet sind, und welche dort enden, wo die Weitenreduktion 44 ausläuft, mit dem Bezugszeichen 49 gekennzeichnet ist.

Wie insbesondere Figur 8, aber auch die Figuren 5, 6 und 7 zeigen, weist das zweite Element 2 überdies eine Feder 50 auf, mit der eine Federkraft auf den Bolzen 15 ausübbar ist. Der Übersichtlichkeit halber ist die Feder 50 in den Figuren 1 und 14 weggelassen. Die Feder 50 ragt in den Einführkanal 41 hinein und/oder ist vorzugsweise als Federplatte ausgeführt. Vorzugsweise kann die Feder 50 einstückig mit dem Körper 22 des zweiten Elements 2 ausgeführt werden. Die Feder 50 könnte aber auch ein separates Element sein und/oder beispielsweise aus einem Federblech bestehen. Im Körper 22 des zweiten Elements 2 ist eine Federaufnahme 45 gebildet, welche die Feder 50, insbesondere bei deren Deformation beim Eintritt des Kopfs 17 des Bolzens 15, zumindest bereichsweise aufnehmen kann. Die Federaufnahme 45 grenzt an den Einführkanal 41 an.

Beim Schliessen der in den Figuren gezeigten Vorrichtung werden die beiden Elemente 1 und 2 zusammengeschoben und dabei der in die Basis 10 des ersten Elements 1 eingeschraubte Bolzen 15 mit seinem Kopf 17 voran durch den Einführbereich 31 in der Durchgangsöffnung 30 des zweiten Elements 2 hindurchgeführt. Die beiden Elemente 1 und 2 werden sodann noch näher zueinander zusammengeschoben. Hierbei erzwingt der Einführkanal 41 eine diagonale Bewegung des Kopfs 17 des Bolzens 15 und leitet den Kopf 17 des Bolzens 15 in den Sicherungskanal 42. Werden nun die beiden Elemente 1 und 2 wieder auseinandergezogen, so gelangt der Kopf 17 des Bolzens 15 entlang des Sicherungskanals 42 zum Sicherungsbereich 32 der Durchgangsöffnung 30 und wird dort von der Grundplatte 21 des zweiten Elements 2 formschlüssig gehalten. Die beiden Elemente 1 und 2 sind damit in einer Vormontageposition miteinander verbunden. Beim Zusammenschieben der beiden Elemente 1 und 2 wirkt die Feder 50 gegen den Kopf 17 des Bolzens 15 und sorgt für eine kraftmässige Rückkopplung an den Monteur. Sobald der Kopf 17 des Bolzens 15 in den Sicherungskanal 42 gelangt ist, entspannt sich die Feder 50 und wirkt nun aufgrund ihrer speziellen Ausgestaltung einer Rückkehr des Kopfs 17 des Bolzens 15 aus dem Sicherungskanal 42 in den Einführkanal 41 entgegen, so dass die Vormontageposition nicht versehentlich verlassen wird.

Die beiden Kanäle 41 und 42 können also eine Zwangsführung für den Kopf 17 des Bolzens 15 bilden, die den Kopf 17 des Bolzens 15 aus der Einführposition in die Sicherungsposition und somit die Vormontageposition führen, wobei die Feder 50 verhindert, dass der Kopf 17 des Bolzens 15 in eine ungeeignete Endposition gelangt. Der Kopf 17 des Bolzens 15 wird also vom zweiten Element 2 gefangen und in den Sicherungskanal 42 geführt, wobei die Feder 50, welche einer Rückkehr des Kopfs 17 des Bolzens 15 aus dem Sicherungskanal 42 entgegenwirkt, bei bestimmungsgemässer Anwendung keine Lasten tragen muss.

Nachdem der Kopf 17 des Bolzens 15 durch Zusammenschieben der beiden Elemente 1 und 2 im Sicherungskanal 42 angelangt ist, wird durch den Sicherungskanal 42 hindurch ein Werkzeug drehfest am Antrieb 18 des Bolzens 15 angesetzt und der Bolzen 15 mittels des Werkzeugs in Drehung versetzt und in das erste Element 1 eingeschraubt. Hierbei nähert sich der Kopf 17 des Bolzens 15 immer näher an das erste Element 1 an, bis ein in den Rohraufnahmen 91 und 92 eingelegtes Rohr spielfrei umgriffen ist. In dieser Endmontageposition ist aufgrund der Weitenreduktion 44 eine Rückkehr des Kopfs 17 des Bolzens 15 in den Einführkanal 41 und zum Einführbereich 31 der Durchgangsöffnung 30 nicht mehr möglich.

Die Bahn, welche der Kopf 17 des Bolzens 15 beim Einführen in das zweite Element 2 und Überführen in die Sicherungsposition und Endmontageposition zurücklegt, ist in Figur 14 mit einem strichlinierten Pfeil angedeutet. Wie Figur 14 zeigt, verläuft die Bahn innerhalb des Körpers 22 des zweiten Elements 2 V-förmig.

In Figur 14 ist überdies noch eine bevorzugte Anordnung der Vorrichtung relativ zum Schwerefeld dargestellt. Wie Figur 14 zeigt, verläuft die Längsachse 98 des Sicherungskanals 42 zumindest annähernd parallel, jedenfalls aber unter einem kleinen Winkel von vorzugsweise weniger als 10°, zur Richtung 99 der Erdbeschleunigung. Infolge des kleinen Winkels kann der Kopf 17 des Bolzens 15 durch Schwerkraftwirkung, welche in der dargestellten Ausführungsform das zweite Element 2 nach unten zieht, vom Übergang zwischen den Kanälen 41 und 42 hinweg und zur Grundplatte 21 und zum Sicherungsbereich 32 der Durchgangsöffnung 30 hin gelangen.

Wie insbesondere die Figuren 1 bis 3 zeigen, weist das erste Element 1 noch einen weiteren Bolzen 90 auf. Dieser ist analog zum ersten Bolzen 15 ausgebildet und ihm ist im zweiten Element 2 ein Verschlussmechanismus zugeordnet, der in Analogie zum Verschlussmechanismus für den ersten Bolzen 15 ausgeführt ist. Wie insbesondere Figur 5 zeigt, weist der Verschlussmechanismus für den weiteren Bolzen 90 eine weitere Durchgangsöffnung 93 in der Grundplatte 21 auf, welcher, bei Blick auf die Aussenseite der Grundplatte 21, um 180° drehsymmetrisch zur Durchgangsöffnung 30 ausgeführt ist. Insbesondere ist also der Einführbereich 31 der Durchgangsöffnung 30 dem Sicherungsbereich 32 der Durchgangsöffnung 30 in einer entgegengesetzten Richtung vorgelagert wie der Einführbereich der weiteren Durchgangsöffnung 93 dem Sicherungsbereich der weiteren Durchgangsöffnung 93. Hierdurch kann eine zusätzliche Sicherung gegen ein unerwünschtes Öffnen erhalten werden.

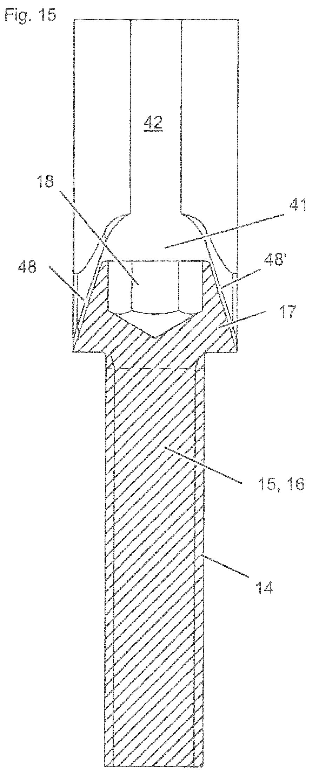

Wie insbesondere Figur 15, aber auch die Figuren 9, 11, 12, 13 und 14 zeigen, weist der Einführkanal 41 zwei gegenüberliegende ebene Flanken 48 und 48' auf. Wie Figur 15 zeigt, weisen diese gegenüberliegende Flanken 48 und 48' im Wesentlichen denselben Öffnungswinkel auf wie der Kopf 17 des Bolzens 15. Die Flanken 48 und 48' können den Kopf 17 des Bolzens 15 im Linienkontakt zum Sicherungskanal 42 hin führen. Entsprechend den Flanken 48 und 48' kann der Kopf 17 des Bolzens 15 mit einem vergleichsweise kleinen Öffnungswinkel ausgestaltet werden, so dass der Kopf 17 und daher auch der Einführbereich 31 relativ klein und somit der gesamte Verschlussmechanismus relativ kompakt ausgestaltet werden kann. Da die Führung des Kopfs 17 über die gegenüberliegenden Flanken 48, 48' erfolgt, ist es hierbei für kleinere Öffnungswinkel nicht erforderlich, den Einführkanal 41 im ganzen steiler zur Grundplatte anzuordnen, so dass der Übergang zwischen dem Einführkanal 41 und dem Sicherungskanal 42 nahe bei der Grundplatte 21 verbleiben kann und somit vergleichsweise kurze Bolzen verwendet werden können.

Die Flanken 48 und 48' sind eben ausgeführt und haben denselben Öffnungswinkel wie der Kopf 17 des Bolzens 15, das heisst sie sind um denselben Winkel geneigt wie die Mantelfläche des Kopfs 17. Zusätzlich sind sie, vorzugsweise in der Ebene senkrecht zur Zeichenebene in Figur 15, also vorzugsweise in der Ebene der Figur 14, um beispielsweise 45° zur Grundplatte 21 angestellt, was dem bevorzugten Winkel des Einführkanals 41 zur Grundplatte 21 von bevorzugt 30° bis 60°, insbesondere etwa 45°, entsprechen kann. Das Neigen der Flanken 48 und 48' in eine Anordnung tangential zum Kopf 17 einerseits und das Anstellen der Flanken 48 und 48' mit dem bevorzugten Winkel von 45° andererseits erlauben es, die Kopfbreite und die Schraubenlänge zu reduzieren. Insbesondere kann der Kopf 17 des Bolzens 15 einen Öffnungswinkel aufweisen, der kleiner ist als das Doppelte des Winkels des Einführkanals 41 zur Grundplatte 21.

## Patentansprüche

1. Schliessbare Vorrichtung mit einem ersten Element (1) und einem zweiten Element (2), wobei das erste Element (1) mit dem zweiten Element (2) verbindbar ist,
- wobei das erste Element (1) eine Basis (10) und einen an der Basis (10) angeordneten Bolzen (15) mit einem Schaft (16) und mit einem Kopf (17) aufweist, wobei der Kopf (17) des Bolzens (15) eine grössere Weite aufweist als der Schaft (16) des Bolzens (15),
- wobei das zweite Element (2) eine Grundplatte (21) und einen der Grundplatte (21) benachbarten Körper (22) aufweist,
- wobei in der Grundplatte (21) eine Durchgangsöffnung (30) ausgebildet ist, welche einen Einführbereich (31) und einen zum Einführbereich (31) versetzten Sicherungsbereich (32) aufweist, wobei der Einführbereich (31) eine grössere Weite aufweist als der Kopf (17) des Bolzens (15), so dass der Kopf (17) des Bolzens (15) durch den Einführbereich (31) hindurchführbar ist, und wobei der Sicherungsbereich (32) eine kleinere Weite aufweist als der Kopf (17) des Bolzens (15), so dass der Kopf (17) des Bolzens (15) am Sicherungsbereich (32) von der Grundplatte (21) formschlüssig gehalten werden kann, und
- wobei im Körper (22) im Anschluss an den Einführbereich (31) der Durchgangsöffnung (30) ein Einführkanal (41) und im Anschluss an den Sicherungsbereich (32) der Durchgangsöffnung (30) ein Sicherungskanal (42) vorgesehen ist, wobei der Einführkanal (41) und der Sicherungskanal (42) ineinander übergehen, wobei am Übergang zwischen dem Einführkanal (41) und dem Sicherungskanal (42) eine Weitenreduktion (44) gebildet ist, welche beabstandet von der Grundplatte (21) ausläuft, so dass nahe der Grundplatte (21) ein Übertritt des Kopfs (17) des Bolzens (15) zwischen dem Sicherungskanal (42) und dem Einführkanal (41) blockiert ist, weiter entfernt von der Grundplatte (21) hingegen ein Übertritt des Kopfs (17) des Bolzens (15) zwischen dem Einführkanal (41) und dem Sicherungskanal (42) möglich ist.

2. Vorrichtung nach Anspruch 1,
**dadurch gekennzeichnet,**
**dass** der Bolzen (15) ein Schraubbolzen ist, welcher in die Basis (10) des ersten Elements (1) unter Annäherung des Kopfs (17) des Bolzens (15) an die Basis (10) des ersten Elements (1) einschraubbar ist.

3. Vorrichtung nach einem der vorstehenden Ansprüche,
**dadurch gekennzeichnet,**
**dass** der Sicherungskanal (42) einen Durchgang durch den Körper (22) des zweiten Elements (2) bildet.

4. Vorrichtung nach einem der vorstehenden Ansprüche,
**dadurch gekennzeichnet,**
**dass** der Kopf (17) des Bolzens (15) einen Antrieb (18) zum Aufbringen eines Drehmoments auf den Bolzen (15) aufweist.

5. Vorrichtung nach einem der vorstehenden Ansprüche,
**dadurch gekennzeichnet,**
**dass** der Sicherungskanal (42) senkrecht auf der Grundplatte (21) steht, und/oder dass der Einführkanal (41) schräg auf der Grundplatte (21) steht.

6. Vorrichtung nach einem der vorstehenden Ansprüche,
**dadurch gekennzeichnet,**
**dass** der Sicherungskanal (42) einen Winkel kleiner als 45° mit der Richtung (99) der Erdbeschleunigung einschliesst.

7. Vorrichtung nach einem der vorstehenden Ansprüche,
**dadurch gekennzeichnet,**
**dass** das zweite Element (2) eine Feder (50) aufweist, welche einem Übertritt des Kopfs (17) des Bolzens (15) vom Sicherungskanal (42) in den Einführkanal (41) entgegenwirkt.

8. Vorrichtung nach Anspruch 7,
**dadurch gekennzeichnet,**
**dass** der Körper (22) des zweiten Elements (2) eine Federaufnahme (45) aufweist, in der die Feder (50) zumindest bereichsweise aufgenommen ist, wobei die Federaufnahme (45) an den Einführkanal (41) angrenzt.

9. Vorrichtung nach einem der vorstehenden Ansprüche,
**dadurch gekennzeichnet,**
**dass** sich der Kopf (17) des Bolzens (15) mit zunehmendem Abstand vom Schaft (16) des Bolzens (15) verjüngt.

10. Vorrichtung nach einem der vorstehenden Ansprüche,
**dadurch gekennzeichnet,**
**dass** der Einführkanal (41) und/oder der Sicherungskanal (42) zylindrisch ausgebildet ist.

11. Vorrichtung nach einem der vorstehenden Ansprüche,
**dadurch gekennzeichnet,**
**dass** die Grundplatte (21) des zweiten Elements (2) und der Körper (22) des zweiten Elements (2) einstückig ausgebildet sind oder
**dass** die Grundplatte (21) des zweiten Elements (2) und der Körper (22) des zweiten Elements (2) separate Teile sind.

12. Vorrichtung nach einem der vorstehenden Ansprüche,
**dadurch gekennzeichnet,**
**dass** der Körper (22) des zweiten Elements (2) aus einem Schaumstoffmaterial besteht und/oder
**dass** die Grundplatte (21) des zweiten Elements (2) aus einem Metallmaterial besteht.

13. Vorrichtung nach einem der vorstehenden Ansprüche,
**dadurch gekennzeichnet,**
**dass** sie eine Rohrschelle ist, wobei das erste Element (1) eine erste Rohraufnahme (91) und das zweite Element (2) eine zweite Rohraufnahme (92) aufweist.

14. Vorrichtung nach einem der vorstehenden Ansprüche,
**dadurch gekennzeichnet,**
**dass** das erste Element (1) einen weiteren Bolzen (90) aufweist, der mit dem zweiten Element (2) verbindbar ist.

15. Vorrichtung nach einem der vorstehenden Ansprüche,
**dadurch gekennzeichnet,**
**dass** der Einführkanal (41) zwei gegenüberliegende, insbesondere ebene, Flanken (48 und 48') zur Führung des Kopfs (17) des Bolzens (15) aufweist.
